# EUROPEAN PATENT APPLICATION

(11) **EP 2 017 819 A2**
(43) Date of publication of application: **21.01.2009**
(21) Application number: 08103177.5
(22) Date of filing: 31.03.2008
(51) Int. Cl.: G09G 5/00

(54) **Display apparatus, host device and control methods thereof**

(30) Priority: 16.07.2007 KR 20070071337
(71) Applicant: Samsung Electronics Co., Ltd., Suwon-si, Gyeonggi-Do (KR)
(72) Inventor: Kim, Sung-Woo, Gyeonggi-do (KR)
(74) Representative: D'Halleweyn, Nele Veerle Trees Gertrudis

(57) **Abstract**

There are provided a display apparatus and a host device which communicates with each other. The display apparatus includes: a display interface which communicates with a host device; a signal processor which processes at least one of a video signal and an audio signal input from the host device; and a controller which controls the signal processor to process at least one of the video signal and the audio signal according to an output setting value corresponding to host information of the host device. The host device includes: a host interface which communicates with the display apparatus; and a host controller which controls the host interface to transmit host information including at least one of operating system (OS) information of the host device and feature information of a peripheral device, to the display apparatus.

## Description

### BACKGROUND OF INVENTION

### 1. Field of Invention

Apparatuses and methods consistent with the present invention relate to a display apparatus, a host device and control methods thereof, and more particularly, to a display apparatus which communicates with a host device operating according to at least one operating system, the host device and control methods thereof.

### 2. Description of Related Art

Generally, a computer system includes a display apparatus. The computer system has a single operating system to manage resources such as a central processing unit (CPU) and the display device, thereby allowing hardware and software to run more efficiently.

The operating system is a kind of program, and serves as an interface between hardware and application programs. The operating system manages computer resources such as a CPU, a main memory device, input/output devices, etc. That is, the operating system facilitates interaction between a human and a computer. Also, the operating system boots the computer, prioritizes system requests, and controls input/output devices. Further, the operating system controls execution of programs, and manages storage of data and files.

Recently, an operating system called Windows Vista has been released, which incorporates Windows Media Center, and includes improved multimedia and security functions to process functions of personal computers (PCs) without a keyboard. Thus, a user can enjoy various entertainment contents without additional audio and video players.

There have been provided various operating systems having different features. A user may desire to execute a plurality of operating systems with a single computer and utilize the respective features of the operating systems.

However, an output setting value of the display apparatus varies depending on the operating systems. Thus, a signal which is transmitted from the host device may vary depending on the respective operating systems. As a result, a user may not have the same output result because of the different operating systems.

### SUMMARY OF INVENTION

The present invention provides a display apparatus which provides an output setting value corresponding to a plurality of operating systems, and processes a signal transmitted from a host device according to the output setting value corresponding to the operation system of the host device, the host device and control methods thereof.

The present invention provides a display apparatus which processes a signal transmitted from a host device according to an output setting value set in consideration of change in a peripheral device connected with the host device, the host device and control methods thereof.

According to an aspect of the present invention, there is provided a display apparatus, including: a display interface which is provided to communicate with a host device; a signal processor which processes at least one of a video signal and an audio signal input from the host device; and a controller which controls the signal processor to process at least one of the video signal and the audio signal according to an output setting value corresponding to host information of the host device.

The host information may include at least one of the operating system (OS) information of the host device and feature information of a peripheral device connected with the host device.

The output setting value may include a compensation value for at least one of gamma and color temperature of the video signal, and volume and volume ranges of the audio signal, which are changed depending on the host information.

The display apparatus may further include a storage unit which stores the output setting value corresponding to the host information.

The controller may control the display interface to transmit extended display identification data (EDID) information of the display apparatus to the host device, and receive the host information from the host device.

The display apparatus may further include an audio output unit, and the controller may control the signal processor to process the audio signal according to the output setting value corresponding to the host information, to be output to the audio output unit.

The display interface may include one of D-sub, digital video interface (DVI), high definition multimedia interface (HDMI), unified display interface (UDI) and display port.

The display apparatus may further include a power source, and the controller may control the display interface to receive the host information if the power source is turned on.

The host device may include a computer.

According to another aspect of the present invention, there is provided a host device which transmits at least one of a video signal and an audio signal to a display apparatus, the host device including: a host interface which is provided to communicate with the display apparatus; and a host controller which controls the host interface to transmit host information including at least one of operating system (OS) information of the host device and feature information of a peripheral device, to the display apparatus.

The host controller may control the host interface to transmit the host information to the display apparatus if EDID information of the display apparatus is received through the host interface.

The host interface may include one of D-sub, DVI, HDMI, UDI, and display port.

According to another aspect of the present invention, there is provided a method of controlling a display apparatus, comprising: receiving host information from a host device; receiving at least one of a video signal and an audio signal from the host device; and processing at least one of the image and audio signals according to an output setting value corresponding to the host information.

The host information may include at least one of OS information of the host device and feature information of a peripheral device connected with the host device.

The output setting value may include a compensation value for at least one of gamma and color temperature of the video signal, and volume and volume ranges of the audio signal, which are changed depending on the host information.

The method may further include storing the output setting value corresponding to the host information.

The processing of at least one of the video and audio signals may include: transmitting EDID information of the display apparatus to the host device through a display interface; and receiving the host information.

The processing of at least one of the video and audio signals may include processing the audio signal according to the output setting value corresponding to the host information to be output to a predetermined audio output unit.

The display apparatus may communicate with the host device through one of D-sub, DVI, HDMI, UDI, and display port standards.

The method may further include receiving a power signal.

The host device may include a computer.

According to another aspect of the present invention, there is provided a method of controlling a host device, comprising: transmitting host information including at least one of OS information of the host device and feature information of a peripheral device connected with the host device, and at least one of a video signal and an audio signal to a display apparatus.

The method may further include receiving EDID information of the display apparatus.

The host device may communicate with the display apparatus through one of D-sub, DVI, HDMI, UDI and display port standards.

### BRIEF DESCRIPTION OF DRAWINGS

The above and/or other aspects of the present invention will become apparent and more readily appreciated from the following description of the exemplary embodiments, taken in conjunction with the accompanying drawings of which:
FIG. 1 is a control block diagram of a display apparatus according to an exemplary embodiment of the present invention;
FIG. 2 is a control block diagram of a host device according to an exemplary embodiment of the present invention;
FIG. 3 illustrates a display system according to an exemplary embodiment of the present invention;
FIG. 4 is a control flowchart of the display apparatus according to the exemplary embodiment of the present invention;
FIG. 5 is a control flowchart of the host device according to an exemplary embodiment of the present invention; and
FIG. 6 is a control flowchart of the display system according to an exemplary embodiment of the present invention.

### DETAILED DESCRIPTION OF EXEMPLARY EMBODIMENT

Hereinafter, exemplary embodiments of the present invention will be described with reference to the accompanying drawings, wherein like numerals refer to like elements and repetitive descriptions will be avoided as necessary.

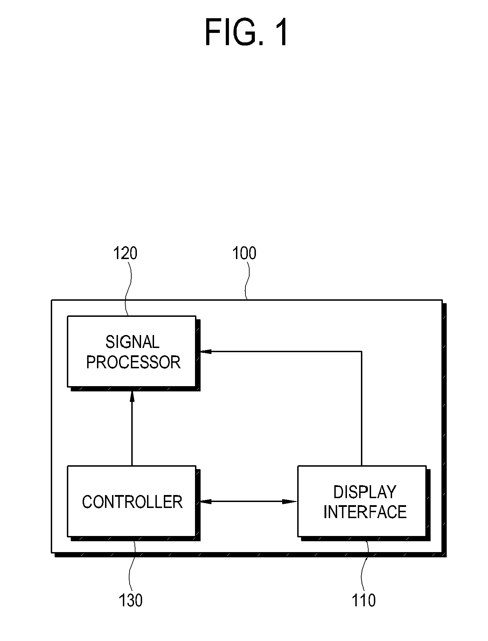

As shown in FIG. 1, a display apparatus 100 according to an exemplary embodiment of the present invention includes a display interface 110, a signal processor 120 and a controller 130.

The display interface 110 communicates with a host device 200, and receives a video signal and an audio signal from the host device 200. The display interface 110 according to the present invention may correspond to a communication standard such as video graphic array (VGA) analog, DVI, HDMI, UDI, display port, etc.

The signal processor 120 processes the video signal and audio signal transmitted from the host device 200, according to a control of the controller 130 (to be described later). That is, the signal processor 120 processes the video signal to be displayable on a display panel, or processes the audio signal to be output through an audio output unit, according to the control of the controller 130.

The controller 130 of the display apparatus 100 controls the signal processor 120 to process the video signal and audio signal transmitted from the host device 200 according to an output setting value corresponding to the host information including OS information of the host device 200 and feature information of a peripheral device, and to output the processed video and audio signals.

The host device 200 processes a video image generated based on EDID information of the display apparatus 100 and the host information to be optimized according to display environments, and transmits the processed video image to the display apparatus 100.

For example, a signal which is transmitted from the host device 200 operating according to an installed OS to the display apparatus 100 may be changed by the type of the OS, i.e., Windows XP or Windows Vista of Microsoft, Macintosh, Unix, etc. Even if the host device 200 and the display apparatus 100 operate according to the same OS, the output value of the signal may be changed according to the features of the peripheral device such as a graphic card and a sound card. That is, the setting value such as brightness, colors, gamma of the video signal and volume curve of the audio signal transmitted to the display apparatus 100 varies depending on host information including the OS information of the host device 200 or the feature information of the peripheral device. Thus, the controller 130 may control the signal processor 120 to compensate for the transmitted video and audio signals based on the output setting value as a prestored output compensation value corresponding to the host information supplied by the host device 200.

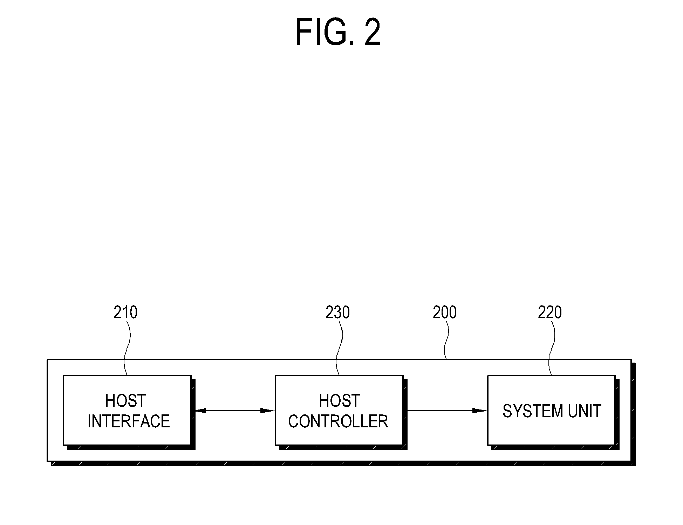

FIG. 2 is a control block diagram of the host device 200 according to the present invention. As shown therein, the host device 200 includes a host interface 210, a system unit 220 and a host controller 230.

Here, the host controller 230 may receive the EDID information on monitor features from a monitor and control a graphic card of the system unit 220 to output an optimal video signal according to the monitor features.

The system unit 220 may operate according to an operating system (not shown) having a graphics device interface (not shown) which supplies functions to generate a video signal according to a control of the host controller 230. A video image which corresponds to the video signal may be displayed by an operating system such as a desktop and Windows Explorer or by an application program such as motion pictures, Messenger, etc.

The host controller 230 may supply host information including OS information of the system unit 220 and feature information of the peripheral device connected with the host device 230, to the display apparatus 100 through the host interface 210. For example, the host controller 230 may store the host information in a register according to a preinstalled program, and transmit the host information to the display apparatus 100 if a request is input from the display apparatus 100, or if the display apparatus 100 is connected with the host device 200.

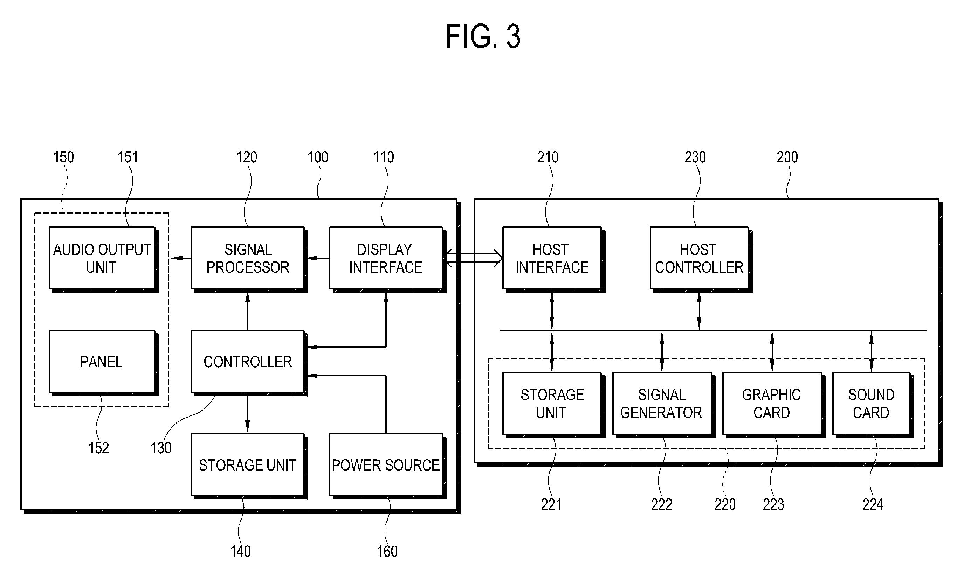

Hereinafter, a display system according to an exemplary embodiment of the present invention will be described in detail. As shown in FIG. 3, the display system according to the present invention includes the host device 200 and the display apparatus 100 which operate according to a predetermined operating system and communicate with each other through an interface.

The host device 200 may include a storage unit 221, a signal generator 222 which generates a signal according to an interface standard, a graphic card 223 which processes a video signal and a sound card 224 which processes sound. The signal generator 222 generates a video signal to display a video image on the display apparatus 100. The generated video signal is transmitted to the display apparatus 100 through the host interface 210.

The signal generator 222 may operate according to an operating system having a graphics device interface (GDI, not shown) which supplies functions to generate a video signal. A video image which corresponds to the video signal may be displayed by an operating system such as a desktop and Windows Explorer or by an application program such as motion pictures, Messenger, etc. The host device 200 communicates with the display apparatus 100 through an internal bus. The host device 200 may further include a ROM (not shown), a RAM (not shown), a hard disk driver (not shown) and an I/O controller (not shown) to execute the OS and application programs.

The controller 130 of the display apparatus 100 controls the signal processor 120 to process the video signal transmitted through the display interface 110 to be displayable on a panel 152 of an output unit 150.

The controller 130 may process the audio signal transmitted through the display interface 110 to be output through an audio output unit 151 which is provided as a speaker of the output unit 150. The controller 130 controls a signal output to the output unit 150 according to the output setting value corresponding to the host information of the host device 200.

The host device 200 may transmit the video signal as RGB analog signals or according to DVI, HDMI, UDI or display port standard.

If the display interface 110 corresponds to the HDMI, UDI or display port standard, the host device 200 may transmit the audio signal as well as the video signal.

Particularly, the display port incorporates low voltage differential signaling (LVDS), i.e., an existing internal interface standard, and DVI, i.e., an external connection standard. The display port enables an internal connection between chips, and an external connection between devices. As the two existing LVDS and DVI interfaces are integrated into a single interface, data is transmitted faster and color realization and resolution are improved. The display port may transmit data at a total data rate of 10.8 Gbps, which is more than double that of the existing DVI (maximum 4.95 Gbps). The display port has a micro-packet architecture and supports multiple streams, thereby transmitting a maximum of six 1080i streams (three 1080p streams) at the same time. Also, the display port has a bi-directional 1Mbps auxiliary channel and supports application such as video chat and Voice over Internet Protocol (VoIP) without an additional interface.

UDI is one of the next generation digital display connection standard, and provides connection compatibility with electronic devices such as HDTV. The UDI is compatible with HDMI, i.e. HDTV connection standard, while providing compatibility with existing DVI connection standard. Thus, a monitor and a HDTV are connected with each other through a single connector.

The UDI supports high-bandwidth digital content protection (HDCP) which is used in HDTV to prevent illegal copying. PCs which have UDI may be connected with any display apparatus having HDMI to generate HD contents safely. The UDI provides users with a general-purpose connection interface between computers and display apparatuses, for example, PCs, laptop computers, HDTVs and projectors.

The storage unit 140 according to an exemplary embodiment of the present invention may store the output setting value as an output compensation value corresponding to the respective host information therein. That is, the storage unit 140 may store an adjusting value to output equivalent video and audio signals transmitted from the host device 200, regardless of the OS.

Thus, if the OS information of the host device 200 is supplied through the display interface 110, the controller 130 searches the output setting value corresponding to the supplied host information from the storage unit 140, and controls the signal processor 120 to process the input video and audio signals based on the output setting value.

The controller 130 may read the OS information from the host device 200 according to a preinstalled program. For example, if the display apparatus 100 is initially connected with the host device 200 such as a computer, the controller 130 may read the host information including the OS information of the host device 200. If a power source 160 of the display apparatus 100 is turned on, the controller 130 may read the host information of the host device 200.

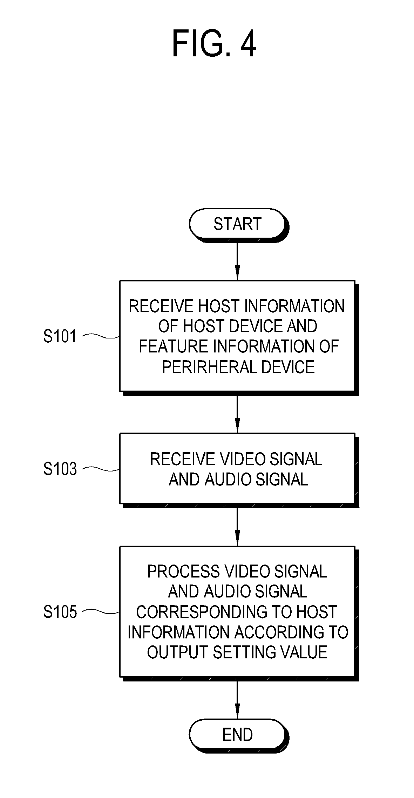

Hereinafter, operations of the display apparatus, the host device and the display system according to exemplary embodiments of the present invention will be described with reference to FIGS. 4 to 6, respectively.

As shown in FIG. 4, the display apparatus 100 receives the host information including the OS information of the host device 200 and the feature information of the peripheral device, from the host device 200 (S101). Here, the host information may be supplied to the display apparatus 100 if the display apparatus 100 is connected with the host device 200 and requests the OS information according to the prestored program of the host device 200. If detecting the connection with the display apparatus 100, the host device 200 may transmit the host information to the display apparatus 100.

The controller 130 of the display apparatus 100 sets the compensation value corresponding to the host information of the host device 200. Here, the display apparatus 100 may store the output setting value corresponding to the plurality of host information. If the video and audio signals are transmitted from the host device 200 (S103), the controller 130 of the display apparatus 100 controls the signal processor 120 to process the video and audio signals corresponding to the host information based on the stored output setting value (S105).

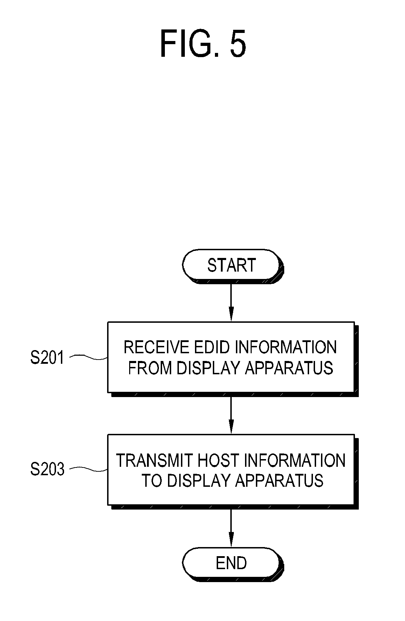

As shown in FIG. 5, if the host device 200 receives the EDID information as monitor information, from the display apparatus 100 (S201), the host device 200 transmits the host information to the display apparatus 100 (S203). The host device 200 generates the video and audio signals and transmits them to the display apparatus 100. Then, the display apparatus 100 compensates for the signals according to the output setting value based on the host information, and outputs the signals.

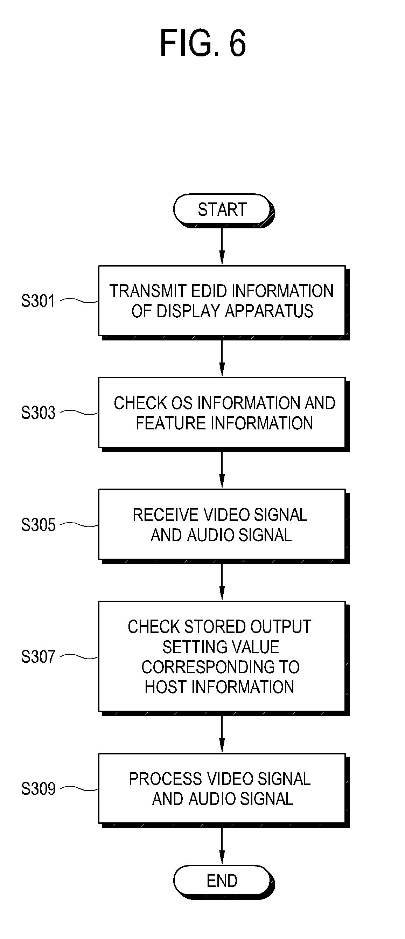

As shown in FIG. 6, a program may be installed in the host device 200 to transmit the host information to the display apparatus 100. According to an exemplary embodiment of the present invention, if the display apparatus 100 is connected with the host device 200 and transmits the EDID information as the monitor information to the host device 200 (S301), the host device 200 checks the OS information and the feature information of the peripheral device (S303), and transmits the signals according to the EDID information to the display apparatus 100.

The display apparatus 100 then receives the video and audio signals generated by the host device 200 (S305), checks the output setting value corresponding to the host information of the host device 200 (S307), and processes the video and audio signals corresponding to the output setting value (S309).

The output setting value corresponding to the host information includes the compensation value for brightness, colors and gamma of the video signal; and volume and volume curves of the audio signal.

As described above, exemplary embodiments of the present invention provide a display apparatus which provides an output setting value corresponding to a plurality of operating systems, and processes a signal transmitted by a host device according to the output setting value corresponding to the operating system of the host device, the host device and control methods thereof.

Also, the exemplary embodiments of the present invention provides a display apparatus which processes a signal transmitted from a host device according to an output setting value set in consideration of change in a peripheral device connected with the host device, the host device and control methods thereof.

Although a few exemplary embodiments of the present invention have been shown and described, it will be appreciated by those skilled in the art that changes may be made in these exemplary embodiments without departing from the principles and spirit of the invention, the scope of which is defined in the appended claims and their equivalents.

## Claims

1. A display apparatus comprising:
a display interface which communicates with a host device;
a signal processor which processes at least one of a video signal and an audio signal input from the host device; and
a controller which controls the signal processor to process at least one of the video signal and the audio signal according to an output setting value corresponding to host information of the host device.

2. The display apparatus according to claim 1, wherein the host information comprises at least one of operating system information of the host device and feature information of a peripheral device communicably linked to the host device.

3. The display apparatus according to claim 1, wherein the output setting value comprises a compensation value for at least one of a gamma and a color temperature of the video signal, a volume and a volume range of the audio signal, which are changed depending on the host information.

4. The display apparatus according to claim 1, further comprising a storage unit in which the output setting value corresponding to the host information is stored.

5. The display apparatus according to claim 1, wherein the controller controls the display interface to transmit extended display identification data information of the display apparatus to the host device, and receive the host information from the host device.

6. The display apparatus as claimed in any one of claims 1 through 5, further comprising an audio output unit, wherein the controller controls the signal processor to process the audio signal according to the output setting value corresponding to the host information, to be output to the audio output unit.

7. The display apparatus as claimed in any one of claims 1 through 5, wherein the display interface comprises one of a D-sub, a digital video interface (DVI), a high definition multimedia interface (HDMI), a unified display interface (UDI) and a display port.

8. The display apparatus as claimed in any one of claims 1 through 5, further comprising a power source, wherein the controller controls the display interface to receive the host information if the power source is turned on.

9. The display apparatus as claimed in any one of claims 1 through 5, wherein the host device comprises a computer.

10. A host device which transmits at least one of a video signal and an audio signal to a display apparatus, the host device comprising:
a host interface which communicates with the display apparatus; and
a host controller which controls the host interface to transmit host information including at least one of operating system information of the host device and feature information of a peripheral device, to the display apparatus.

11. The host device according to claim 10, wherein the host controller controls the host interface to transmit the host information to the display apparatus if extended display identification data information of the display apparatus is received through the host interface.

12. The host device according to claim 10 or claim 11, wherein the host interface comprises one of a D-sub, a digital video interface (DVI), a high definition multimedia interface (HDMI), a unified display interface (UDI) and a display port.

13. A method of controlling a display apparatus, the method comprising:
receiving host information from a host device;
receiving at least one of a video signal and an audio signal from the host device; and
processing at least one of the video signal and the audio signal according to an output setting value corresponding to the host information.

14. The method according to claim 13, wherein the host information comprises at least one of operating system information of the host device and feature information of a peripheral device communicably linked to the host device.

15. The method according to claim 13, wherein the output setting value comprises a compensation value for at least one of a gamma and a color temperature of the video signal, a volume and a volume range of the audio signal, which are changed depending on the host information.

16. The method as claimed in any one of claims 13 through 15, further comprising storing the output setting value corresponding to the host information.

17. The method as claimed in any one of claims 13 through 15, wherein the processing at least one of the video signal and the audio signal comprises:
transmitting extended display identification data information of the display apparatus to the host device through a display interface; and
receiving the host information.

18. The method as claimed in any one of claims 13 through 15, wherein the processing at least one of the video signal and the audio signal comprises processing the audio signal according to the output setting value corresponding to the host information to be output to an audio output unit.

19. The method as claimed in any one of claims 13 through 15, wherein the display apparatus communicates with the host device through one of a D-sub, a digital video interface (DVI), a high definition multimedia interface (HDMI), a unified display interface (UDI) and a display port.

20. The method as claimed in any one of claims 13 through 15, further comprising receiving a power signal.

21. The method as claimed in any one of claims 13 through 15, wherein the host device comprises a computer.

22. A method of controlling a host device, the method comprising:
transmitting a host information including at least one of operating system information of the host device and feature information of a peripheral device communicably linked to the host device, and at least one of a video signal and an audio signal to a display apparatus.

23. The method according to claim 22, further comprising receiving extended display identification data information of the display apparatus.

24. The method according to claim 22 or claim 23, wherein the host device communicates with the display apparatus through one of a D-sub, a digital video interface (DVI), a high definition multimedia interface (HDMI), a unified display interface (UDI) and a display port.
